Europäisches Patentamt

European Patent Office

Office européen des brevets

(11) Veröffentlichungsnummer: **0 476 241 A2**

# EUROPÄISCHE PATENTANMELDUNG

(21) Anmeldenummer: **91110535.1**

(22) Anmeldetag: **26.06.91**

(51) Int. Cl.5: **G02B 26/02**

(30) Priorität: **18.09.90 DE 4029569**

(43) Veröffentlichungstag der Anmeldung:
**25.03.92 Patentblatt 92/13**

(84) Benannte Vertragsstaaten:
**AT BE CH DE DK ES FR GB IT LI NL SE**

(71) Anmelder: **Richard Hirschmann GmbH & Co.**
**Richard-Hirschmann-Strasse 19 Postfach 110**
**W-7300 Esslingen a.N.(DE)**

(72) Erfinder: **Roeckle, Jürgen**
**Tübingerstrasse 1**
**W-7132 Kirchheim(DE)**
Erfinder: **Götzelmann, Joachim**
**Hofäcker 301**
**W-7119 Ailringen(DE)**
Erfinder: **Frank, Ewald**
**Hesseweg 1**
**W-7307 Aichwald(DE)**

(74) Vertreter: **Geyer, Ulrich F., Dr. Dipl.-Phys. et al**
**WAGNER & GEYER Patentanwälte**
**Gewuerzmuehlstrasse 5 Postfach 246**
**W-8000 München 22(DE)**

(54) **Faseroptischer Schalter.**

(57) Bei einem faseroptischen Schalter (1) mit einem starren Schaltelement (1a) und einem bewegbaren Schaltelement (1b), wobei am starren Schaltelement (1a) und am bewegbaren Schaltelement (1b) jeweils wenigstens eine Lichtwellenleiterfaser (13, 14) befestigt ist, deren einander zugewandte Faserschaltenden (13a, 13b, 14a, 14b) in der einen Schaltstellung an der vorhandenen Stoßstelle (15) miteinander fluchten, und das bewegbare Schaltelement (1b) in einer die Faserschaltenden enthaltenden Ebene quer zur Lichtwellenleiterfaser (13, 14) bewegbar an den einen Enden von biegbaren Streifen (8) gehalten ist, die einen Abstand voneinander aufweisen, sich quer zur Bewegungsrichtung (10) des bewegbaren Schaltelements (1b) erstrecken, hochkant zur Bewegungsebene angeordnet sind und mit ihren anderen freien Enden ortsfest gehalten sind, soll der Herstellungsaufwand und/oder die Baugröße verringert werden. Dies wird dadurch erreicht, daß das starre Schaltelement (1a), das bewegbare Schaltelement (1b) und die biegbaren Streifen (8) einteilig miteinander verbunden sind. Gemäß einer anderen Ausgestaltung ist ein aktivierbares Biegeelement (24) die Stoßstelle (15) überbrückend angeordnet.

Die Erfindung bezieht sich auf einen faseroptischen Schalter nach dem Oberbegriff des Anspruchs 1 bzw. 4.

Ein faseroptischer Schalter nach dem Oberbegriff des Anspruchs 1 ist in der DE-OS 34 37 489 beschrieben. Bei dieser bekannten Ausgestaltung weist der faseroptische Schalter ein Gehäuse mit einer außermittigen rechteckigen Öffnung auf, in der etwa mittig das bewegbare Schaltelement angeordnet ist. Es sind zwei Lichtwellenleiterfasern auf den Oberflächen des Gehäuses und des beweglichen Schaltelements angeordnet, wobei die Stoßstellen zwischen den Schaltenden der Lichtwellenleiterfasern bezüglich des Gehäuses etwa zentral und dabei zwischen dem bewegbaren Schaltelement und dem ihm zugewandten Rand der Gehäuseöffnung angeordnet sind. Das bewegbare Schaltelement ist in der Ebene der Lichtwellenleiterfasern und rechtwinklig zu den Lichtwellenleiterfasern frei bewegbar an zwei parallel zueinander und in einem Abstand voneinander angeordneten Blattfedern gehalten, die sich etwa längs den Lichtwellenleiterfasern erstrecken und dabei hochkant zur Bewegungsebene des beweglichen Schaltelements angeordnet sind und deren Enden zum einen am beweglichen Schaltelement und zum anderen am Gehäuse befestigt sind. Die Blattfedern befinden sich auf der Seite des beweglichen Schaltelements, die den Stoßstellen der Schaltenden der Lichtwellenleiterfasern abgewandt ist. Dabei befinden sich die Blattfedern auf der Seite des Gehäuses, zu der auch die Gehäuseöffnung hin versetzt ist, wobei sie an den hier schmalen, sich in der Ebene der Gehäuseöffnung erstreckenden Rahmenteil des Gehäuses befestigt sind und in den freien Raum der Gehäuseöffnung bis zum beweglichen Schaltelement vorspringen. Zur Begrenzung der Schaltbewegungen des Schaltelements sind den sich parallel zu den Lichtwellenleiterfasern erstreckenden Lochrändern verstellbare Anschläge zugeordnet. Der Antrieb des beweglichen Schaltelements in seine Schließstellung erfolgt durch Elektromagnete, die auf der die Schließstellung bestimmenden Anschlagseite angeordnet sind.

Diese bekannte Ausgestaltung ist vielgliedrig und deshalb aufwendig sowie teuer in der Herstellung. Dies ist nicht nur durch die Herstellung der Vielzahl der Teile, sondern auch durch die aufwendige Montage vorgegeben. Außerdem führt diese bekannte Ausgestaltung zu großen Schaltabmessungen.

Ein faseroptischer Schalter nach dem Oberbegriff des Anspruchs 4 ist in der EP-PS 0048867 beschrieben. Bei dieser bekannten Ausgestaltung sind ebenfalls ein starres und ein bewegliches Schaltelement vorgesehen, wobei das bewegliche Schaltelement durch einen Piezokeramik-Biegestreifen gebildet wird, der die zugehörigen Faserschaltenden an seinem freien Ende trägt, wobei er sich in Flucht mit diesen Faserschaltenden bis zur zugehörigen Stoßstelle erstreckt. An seinem anderen Ende ist der Biegestreifen in einer Halterung befestigt. Zur Begrenzung der Schaltbewegungen des beweglichen Schaltelements sind Anschläge vorgesehen.

Auch diese bekannte Ausgestaltung ist sehr aufwendig. Außerdem ist es schwierig und kompliziert, die Faserenden am Biegestreifen zu befestigen und in der bezüglich der benachbarten Faserschaltenden vorgegebenen Flucht zu halten, weil der Biegestreifen einer Krümmung unterliegt.

Der Erfindung liegt die Aufgabe zugrunde, den bauteilemäßigen und fertigungtechnischen Aufwand bei faseroptischen Schaltern der eingangs angegebenen Arten zu verringern, kleine Baugrößen zu erreichen und zuverlässig arbeitende faseroptische Schalter zu schaffen.

Diese Aufgabe wird durch die Merkmale des Anspruchs 1 bzw. 4 gelöst. Vorteilhafte Weiterbildungen der Erfindung sind in den weiteren Ansprüchen gekennzeichnet.

Bei einem faseroptischen Schalter nach Anspruch 1 bilden das starre und das bewegliche Schalterelement und die biegbaren Streifen ein einteiliges Schalterteil, das somit einfach hergestellt werden kann. Da die biegbaren Streifen einstückig mit den Schaltelementen verbunden sind, bedarf es keiner Montage der biegbaren Streifen an den Schaltelementen, wodurch der Aufbau, die Herstellung und die Montage wesentlich vereinfacht und die Baugröße verringert werden kann.

Bei dem faseroptischen Schalter nach Anspruch 4 ist der Biegestreifen mit beiden Schalterelementen verbunden, wobei er die Stoßstelle der Faserschaltenden überbrückt. Hierdurch wird ebenfalls der Aufbau des Schalters wesentlich vereinfacht, wobei sich außerdem eine kleine Baugröße des Schalters verwirklichen läßt, weil die erforderliche Länge des Biegestreifens auf beide Schaltelemente verteilt werden kann. Ferner ist nicht der Biegestreifen, sondern das bewegbare Schaltelement unmittelbar Träger bzw. Führungsteil des zugehörigen Faserschaltendes, so daß der Biegestreifen die Funktion eines Antriebselements übernimmt. Die Eigenverbiegung des Biegestreifens wird somit nicht unmittelbar auf das zugehörige Faserschaltende der Lichtwellenleiterfaser übertragen, wodurch eine Beeinträchtigung der Flucht der zueinander gehörigen Faserschaltenden verhindert ist.

Zu einer besonders stabilen und funktionssicheren Bauweise führt die Ausgestaltung nach Anspruch 10, bei der die biegbaren Streifen als abgewinkelte Schenkel nicht nur zu einer Stabilisierung der beiden Schaltelemente führen, sondern auch eine stabile Parallelogrammführung ergeben, was sich vorteilhaft auf die Parallelverschiebung der Faserschaltenden auswirkt.

Nachfolgend werden die Erfindung und weitere durch sie erzielbare Vorteile anhand von in vereinfachten Zeichnungen dargestellten bevorzugten Ausführungsbeispielen näher erläutert. Es zeigt:

Fig. 1    ein erfindungsgemäß ausgestaltetes Tragteil für Lichtwellenleitfasern eines faseroptischen Schalters in perspektivischer Darstellung;

Fig. 2    das mit Lichtwellenleitfasern bestückte Tragteil in der Draufsicht und in der Einschaltstellung;

Fig. 3    das Tragteil nach Fig. 2 in der Ausschaltstellung;

Fig. 4    ein erfindungsgemäß ausgeschalteter faseroptischer Schalter mit dem Tragteil und einem Gehäuse in der Draufsicht;

Fig. 5    das Tragteil nach Fig. 2 oder 4 in der Unteransicht;

Fig. 6    das Tragteil in der Seitenansicht;

Fig. 7    ein Tragteil für einen erfindungsgemäßen Schalter in der Seitenansicht und in abgewandelter Ausgestaltung.

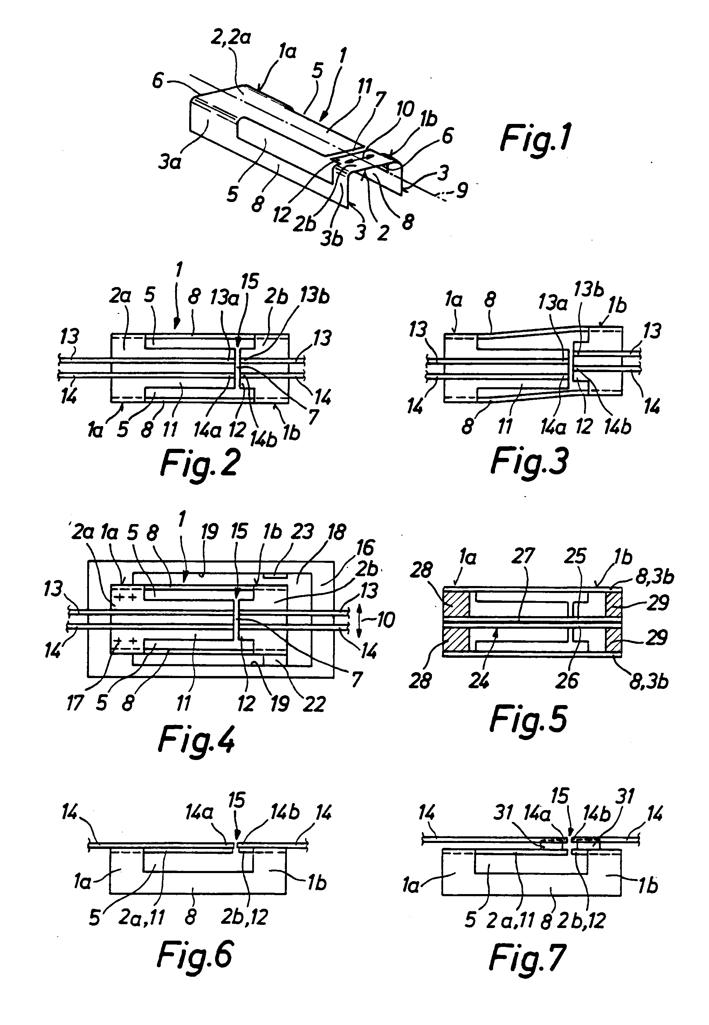

Bei dem in Fig. 1 perspektivisch dargestellten Tragteil 1 handelt es sich um ein einteiliges Formteil, das ein Profilstück U-förmigen Querschnitts ist. Es kann ein Stanz-/Biegeteil aus Blech oder auch ein aus Kunststoff bestehendes Formteil sein. Auf Grund seiner durch ein auf den Kopf gestelltes U gebildeten Querschnittsform weist es in seiner Normalstellung einen horizontalen Steg 2 auf, an dessen Längsrändern rechtwinklig nach unten abstehende und sich ebenfalls in Längsrichtung parallel zueinander erstreckende Schenkel 3 vorgesehen sind. An beiden Längskanten zwischen dem Steg 2 und den Schenkein 3 sind schmale, sich in Längsrichtung erstreckende Ausnehmungen 5 vorgesehen, die jeweils einen Abstand von den Stirnkanten 6 des Tragteils 1 aufweisen. Im Bereich der in den Figuren rechten Enden der Ausnehmungen 5 sind diese durch einen Querschlitz 7 U- oder H-förmig miteinander verbunden. Hierdurch sind die stirnseitigen Enden des Tragteils 1 lediglich durch sich längserstreckende und hochkant zum Steg 2 angeordnete Schenkelstreifen 8 miteinander verbunden, die quer zu ihrer Ebene sowie quer zur Längsachse 9 des Tragteils 1 und dabei parallel zum Steg 2 biegbar sind, wobei sie auf Grund des vorhandenen Materials, - etwa Metall, z. B. Messing, oder Kunststoff - eine gewisse Elastizität haben und deshalb im Sinne von Flachfedern elastisch biegbar sind. Diese stirnseitigen Endteile des Tragteils 1 bilden im Querschnitt U-förmige Schaltelemente 1a, 1b mit jeweils einem horizontalen Stegteil 2a, 2b und vertikalen Schenkelteilen 3a, 3b. Auf Grund der horizontalen Biegsamkeit der Schenkelstreifen 8 sind die Schaltelemente 1a, 1b in der horizontalen Querrichtung (Doppelpfeil 10) relativ zueinander verstellbar bzw. verschiebbar, wobei sie in der vertikalen Querrichtung auf Grund des Widerstandsmoments der hochkant angeordneten Schenkelstreifen 8 stabilisiert und deshalb im wesentlichen nicht relativ zueinander verschiebbar sind. Dabei bilden die Schenkelstreifen 8 eine horizontale Querführung, insbesondere eine Parallelogrammführung, auf Grund der die Schaltelemente 1a, 1b bei ihrer Relativverschiebung bezüglich der Längsachse 9 in parallelen Positionen verbleiben. Auf Grund der beim vorliegenden Ausführungsbeispiel H-förmigen Anordnung des Querschlitzes 7 weist das linke Schaltelement 1a eine lange, nach rechts weisende Stegzunge 11 und das rechte Schaltelement 1b eine kurze nach links weisende Stegzunge 12 auf.

Auf den Oberseiten der Stegteile 2a, 2b sind zwei, einen Abstand voneinander aufweisende und sich parallel zueinander und symmetrisch zur Längsachse 9 erstreckende Lichtwellenleiterfasern 13, 14 vorzugsweise durch Kleben befestigt, die in der miteinander fluchtenden Normalstellung der Schaltelemente 1a, 1b miteinander fluchten und im Bereich des Querschlitzes 7 unterbrochen sind. Die Lichtwellenleiterfasern 13, 14 bilden so mit dem Schaltelement 1a zugehörige Faserschaltenden 13a, 14a und dem Schaltelement 1b zugehörige Faserschaltenden 13b, 14b. In der miteinander fluchtenden Stellung der Schaltelemente 1a, 1b befindet sich der so gebildete faseroptische Schalter in seiner Schließstellung, in der Lichtwellen durch die Lichtwellenleiterfasern gesendet werden können. In der relativ zueinander verschobenen Stellung gemäß Fig. 3 befindet sich der Schalter in seiner Offenstellung, in der der Fluß der Lichtwellen an der Stoßstelle 15 unterbrochen ist. Dabei kann es sich um einen Ausschalter oder um einen Umschalter handeln. Im letzten Fall werden die Schaltelemente 1a, 1b so weit relativ zueinander verschoben, daß zum Beispiel das Faserschaltende 13a mit dem Faserschaltende 14b in Flucht steht, wodurch sich umschaltende Steuervorgänge verwirklichen lassen.

Vorzugsweise ist das die kurze Stegzunge 12 aufweisende Schaltelement 1b das bewegbare Schalterteil, während das Schaltelements 1a das starre Schalterteil ist.

Für den Schaltbewegungsantrieb können verschiedene Antriebselemente vorgesehen sein, zum Beispiel wenigstens ein Elektromagnet, ein Piezoelement oder ein pneumatischer Stößelantrieb, was in den Fig. 1 bis 4 nicht dargestellt ist. Der zuletzt genannte Verwendungsfall eignet sich insbesondere für explosionsgeschützte Ausführungen des faseroptischen Schalters. Zur Begrenzung der Schaltbewegungen können verstellbare oder starre Anschläge für das bewegbare Schaltelement 1b vorgesehen sein.

Gemäß Fig. 4 ist das Tragteil 1 in einem andeutungsweise dargestellten Gehäuse 16 angeordnet, wobei das Schaltelement 1a starr am Gehäuse 16 befestigt ist, was durch das Bezugszeichen 17 angedeutet ist. Das Schaltelement 1b ist somit mit den Faserschaltenden 13b, 14b im Hohlraum 18 des Gehäuses 16 frei verschiebbar, der das Schaltelement 1b mit Abstand umgibt. An den Seitenwänden 19, 21 des Gehäuses 16 sind innenseitig dem bewegbaren Schaltelement 1b gegenüberliegend Anschlagstücke 22, 23 angeordnet, von denen das Anschlagstück 22 so groß bemessen ist, daß das Schaltelement 1b in seiner mittleren Normalstellung, d. h. in der Schließstellung des Schalters, anliegt. Das Anschlagstück 23 ist dünner bemessen, so daß das Schaltelement 1b in die Schalteroffenstellung gegen das Anschlagstück 23 verschoben werden kann.

Bei dem Ausführungsbeispiel gemäß Fig. 5 ist als Antriebselement für das bewegbare Schaltelement 1b ein Piezoelement, vorzugsweise in Form einer Biegestange oder eines Biegestreifens 24 vorgesehen. Der Biegestreifen 24 ist etwa von der gleichen Länge wie das Tragteil 1, so daß er die Stoßstelle 15 überbrückend mit seinem einen Ende am Schaltelement 1a und mit seinem anderen Ende am Schaltelement 1b befestigt werden kann. Der Biegestreifen 24 ist vozugsweise ein Piezo-Parallelbimorphelement und besteht aus zwei Keramikschichten 25, 26, zwischen denen ein Metallstreifen 27 zur Stabilitätsvergrößerung angeordnet ist. Die Keramikschichten 25, 26 und der Metallstreifen 27 bildet ein Verbundteil. Bei der Ausgestaltung nach Fig. 5 ist der Biegestreifen 24 an den Unterseiten der Stegteile 2a, 2b hochkant dazu angeordnet und befestigt, wobei zur Befestigung Klemmelemente 28, 29 verwendet werden können. Es können Klemmklötzchen vorgesehen sein, die sich jeweils zwischen den Schenkelteilen 3a, 3b und dem Biegestreifen 24 erstrecken. Vorzugsweise ist die Befestigungsstelle zwischen dem Biegestreifen 24 und dem bewegbaren Schaltelement 1b zu dessen Stirnkante 6 hin verlegt, was gemäß Fig. 5 durch schmale an die zugehörige Stirnkante 6 angrenzende Klemmklötzchen verdeutlicht ist.

Bei der Ausgestaltung nach Fig. 7 sind die Endbereiche der Faserschaltenden 13a, 13b, 14a, 14b auf Plättchen 31 mit im Querschnitt V-förmigen Längsnuten angeordnet, die unmittelbar oder nahe den Stoßstellen 15 auf der Oberseite der Stegzungen 11, 12 befestigt sind, z. B. durch Kleben. Dabei liegen die Faserschaltenden 13a, 13b, 14a, 14b in den Längsnuten der Plättchen 31, wobei sie daran vorzugsweise durch Kleben befestigt sind. Bei dieser Ausgestaltung weisen die Faserschaltenden 13a, 13b, 14a, 14b einen geringen Abstand von den Oberseiten der Stegteile 2a, 2b auf.

Die Lichtwellenleiterfasern 13, 14 werden mit fertig bearbeiteten Endflächen an den Stoßstellen (vorzugsweise geritzt und gebrochen) auf vorzugsweise dem gemeinsamen Plättchen 31 mit insbesondere eingeätzten parallel zur Längsachse 9 verlaufenden V-Nuten justiert und gehalten. Die Plättchen werden anschließend auf den zugehörigen Schaltelementen justiert und fixiert, z. B. durch Kleben. Hierdurch ist eine sehr genaue Positionierung der Lichtwellenleiterfasern möglich. Außerdem ist eine Justierung auf minimale Koppeldämpfung in mindestens einer Schaltstellung möglich.

Das Gehäuse 16 besteht vorzugsweise aus elektrisch isolierendem und schwingungsdämpfendem Material, wobei es vorzugsweise mit einer Flüssigkeit gefüllt ist zur Dämpfung der mechanischen Schwingungen des Schalters. Die Flüssigkeit muß elektrisch isolierend sein und den gleichen oder einen ähnlichen Brechungsindex wie das Glas des Faserkerns haben.

Es ist im Rahmen der Erfindung auch möglich, daß gehaltene bzw. starre Ende des Biegestreifens 24 am Gehäuse 16 zu befestigen, zum Beispiel an dem Teil, das auch das starre Schaltelement 1a hält. In diesem Falle ist dieses Gehäuseteil aus elektrisch isolierendem und möglichst schwingungsdämpfendem Material herzustellen.

Die Erfindung wird wie folgt zusammengefasst: Faseroptischer Schalter mit einem starren Schaltelement und einem bewegbaren Schaltelement, wobei am starren Schaltelement und am bewegbaren Schaltelement jeweils wenigstens eine Lichtwellenleiterfaser befestigt ist, deren einander zugewandte Faserschaltenden in der einen Schaltstellung an der vorhandenen Stoßstelle miteinander fluchten, und das bewegbare Schaltelement in einer die Faserschaltenden enthaltenden Ebene quer zur Lichtwellenleiterfaser verschiebbar an den einen Enden von biegbaren Streifen gehalten ist, die einen Abstand voneinander aufweisen, sich quer zur Bewegungsrichtung des bewegbaren Schaltelements erstrecken, hochkant zur Bewegungsebene angeordnet sind und mit ihren anderen freien Enden ortsfest gehalten sind, wobei das starre Schaltelement (1a), das bewegbare Schaltelement (1b) und die biegbaren Streifen (8) einteilig miteinander verbunden sind.

Schalter nach nach dem vorhergehenden Punkt, wobei als Antriebselement für das bewegbare Schaltelement (1b) ein Elektromagnet, ein aktivierbares Biegeelement (24), insbesondere ein Piezoelement, oder ein pneumatisches Antriebsteil vorgesehen ist.

Schalter nach einem oder mehreren der vorhergehenden Punkte, wobei das Biegeelement (24) die Stoßstelle (15) zwischen den Faserschaltenden (13a, 13b, 14a, 14b) überbrückend angeordnet ist.

Faseroptischer Schalter mit einem starren Schaltelement und einem bewegbaren Schaltelement, wobei am starren Schaltelement und am bewegbaren Schaltelement jeweils wenigstens eine Lichtwellenleiterfaser befestigt ist, deren an einer Stoßstelle einander zugewandte Faserschaltenden in der einen Schaltstellung miteinander fluchten, und das bewegbare Schaltelement in einer die Faserschaltenden enthaltenen Ebene quer zu den Faserschaltenden bewegbar ist, wobei als Antriebselement für das bewegbare Schaltelement ein insbesondere stabförmiges, aktivierbares Biegeelement vorgesehen ist, wobei das Biegeelement (24) die Stoßstelle (15) überbrückend angeordnet ist.

Schalter nach einem oder mehreren der vorhergehenden Punkte, wobei das Biegeelement (24) ein aktivierbarer Biegestab, insbesondere ein aktivierbarer Biegestreifen (24) ist.

Schalter nach einem oder mehreren der vorhergehenden Punkte, wobei das Biegeelement (24) am starren Schaltelement (1a) gehalten ist.

Schalter nach einem oder mehreren der vorhergehenden Punkte, wobei das bewegbare Schaltelement (1b) durch zwei biegbare Streifen (8) in der Bewegungsebene und quer zu den Faserschaltenden bewegbar gehalten ist, die in einem vorzugsweise parallelen Abstand voneinander angeordnet sind, sich quer zur Bewegungsrichtung erstrecken und hochkant zur Bewegungsebene angeordnet sind.

Schalter nach einem oder mehreren der vorhergehenden Punkte, wobei das starre Schaltelement (1a), das bewegbare Schaltelement (1b) und die biegbaren Streifen (8) einteilig miteinander verbunden sind.

Schalter nach einem oder mehreren der vorhergehenden Punkte, wobei die biegbaren Streifen (8) an den aneinander zugewandten Enden des starren Schaltelements (1a) und des bewegbaren Schaltelements (1b) befestigt, vorzugsweise einteilig angebunden sind.

Schalter nach einem oder mehreren der vorhergehenden Punkte, wobei das starre und das bewegbare Schaltelement (1a, 1b) jeweils durch einen Stegteil (2a, 2b) mit von dessen Längsrändern U-förmig ausgehenden Schenkelteilen (3a, 3b) gebildet sind, wobei die biegbaren Streifen (8) an den einander zugewandten Enden der Schenkelteile (3a, 3b) vorzugsweise einstückig angebunden sind und die Stegteile (2a, 2b) durch einen U-förmigen oder H-förmigen Schlitz (5, 7) voneinander getrennt sind.

Schalter nach einem oder mehreren der vorhergehenden Punkte, wobei die Längsabschnitte (5) des U- oder H-förmigen Schlitzes im Kantenbereich zwischen dem Stegteil (2a, 2b) sowie den Schenkeln (3a, 3b) und der Querabschnitt (7) vorzugsweise am oder nahe dem bewegbaren Schaltteil (1b) angeordnet sind.

Schalter nach einem oder mehreren der vorhergehenden Punkte, wobei das starre Schaltelement (1a), das bewegbare Schaltelement (1b) und die biegbaren Streifen (8) durch ein einteiliges Stanz-/Biegeteil gebildet sind.

Schalter nach einem oder mehreren der vorhergehenden Punkte, wobei das starre Schaltelement (1a), das bewegbare Schaltelement (1b) und die biegbaren Streifen (8) durch ein einteiliges, vorzugsweise im Spritzgießverfahren hergestelltes Kunststoffteil gebildet sind.

Schalter nach einem oder mehreren der vorhergehenden Punkte, wobei am bewegbaren Schaltelement (1b) ein ferromagnetisches Teil befestigt, insbesondere ein ferromagnetisches Einsatzteil integriert ist.

Schalter nach einem oder mehreren der vorhergehenden Punkte, wobei die Schaltelemente (1a, 1b) mit den biegbaren Streifen (8) oder die biegbaren Streifen (8) aus biegeelastischem Material bestehen.

Schalter nach einem oder mehreren der vorhegehenden Punkte, wobei das bewegbare Schaltelement (1b) in seiner mit dem starren Schaltelement (1a) fluchtenden Stellung und/oder in der Stellung, in der die Faserschaltenden (13a, 13b, 14a, 14b) miteinander fluchten, in seiner diesbezüglichen Bewegungsrichtung durch einen Anschlag (22) begrenzt ist.

Schalter nach einem oder mehreren der vorhergehenden Punkte, wobei das bewegbare Schaltelement (1b) in seiner passiven Schließstellung unter der Federkraft der Streifen (8) am Anschlag (22) anliegt.

Schalter nach einem oder mehreren der vorhergehenden Punkte, wobei das bewegbare Schaltelement (1b) in der Stellung, in der es gegenüber dem starren Schaltelement (1a) verschoben ist und/oder in der die Faserschaltenden (13a, 13b, 14a, 14b) nicht miteinander fluchten, in einer diesbezüglichen Bewegungsrichtung durch einen Anschlag (23) begrenzt ist.

Schalter nach einem oder mehreren der vorhergehenden Punkte, wobei der bzw. die Anschläge (22, 23) verstellbar oder einstellbar sind.

Schalter nach einem oder mehreren der vorhergehenden Punkte, wobei das aktivierbare, vorzugsweise durch ein Piezo-Element gebildete Biegeelement (24) ein sich quer zur Bewegungsrichtung (10) des bewegbaren Schaltelements (1b) erstreckender und hochkant zu dessen Bewegungsebene angeordneter Biegestreifen ist.

Schalter nach einem oder mehreren der vorhergehenden Punkte, wobei das Biegeelement (24) ein Piezo-Parallel-Bimorphelement ist und vorzugsweise aus zwei Keramikplättchen (25, 26) und einem bzw. einer dazwischen angeordneten Metallplättchen (27) oder Metallfolie besteht.

Schalter nach einem oder mehreren der vorhergehenden Punkte, wobei das Biegeelement (24) vorzugsweise mittig zwischen den Schenkelteilen (3a, 3b) der Schaltelemente (1a, 1b), insbesondere mittels Befestigungs- oder Klemmteilen (28, 29) an wenigstens dem bewegbaren Schaltelement (1b), vorzugsweise beiden Schaltelementen (1a, 1b) befestigt ist.

Schalter nach einem oder mehreren der vorhergehenden Punkte, wobei die Befestigungs- oder Klemmelemente (28, 29) sich jeweils vom Biegeelement (24) bis zum seitlich gegenüberliegenden Schenkelteil (3a, 3b ) erstrecken.

Schalter nach einem oder mehreren der vorhergehenden Punkte, wobei die Lichtwellenleiterfaser(n) (13, 14) an der Außenseite der Stegteile (2a, 2b) angeordnet und befestigt, vorzugsweise geklebt sind.

Schalter nach einem oder mehreren der vorhergehenden Punkte, wobei die Endbereiche der Faserschaltenden (13a, 13b, 14a, 14b) in Nuten V-förmigen Querschnitts angeordnet, insbesondere geklebt sind.

Schalter nach einem oder mehreren der vorhergehenden Punkte, wobei die Nuten in Plättchen (31) aus insbesondere Silizium angeordnet sind, die an den Schaltelementen (1a, 1b) befestigt, vorzugsweise geklebt sind.

Schalter nach einem oder mehreren der vorhergehenden Punkte, wobei der Schalter (1) in einem Gehäuse (16) angeordnet ist, das vorzugsweise mit einer insbesondere elektrisch isolierenden Flüssigkeit gefüllt ist, deren Brechungsindex gleich oder ähnlich wie der des Glases des Faserkerns ist und das starre Schaltelement (1a) mittelbar oder unmittelbar am Gehäuse (16) gehalten ist.

Schalter nach einem oder mehreren der vorhergehenden Punkte, wobei der oder die Anschläge (22, 23) am Gehäuse (16) vorzugsweise an dessen jeweils gegenüberliegenden Innenwand angeordnet ist bzw. sind.

Schalter nach einem oder mehreren der vorhergehenden Punkte, wobei dem bewegbaren Schaltelement (1b) ein Antriebselement zugeordnet ist und eine Regelvorrichtung mit einem die Lichtintensität in der wenigstens einen Ausgangsfaser ermittelnden Sensor zur Verstellung des bewegbaren Schaltelements (1b) in Abhängigkeit von der Lichtintensität vorgesehen ist.

Schalter nach einem oder mehreren der vorhergehenden Punkte, wobei die Regelvorrichtung das bewegbare Schaltelement (1b) über das Antriebselement zur optischen Ausrichtung von Eingangs- zu Ausgangsfaser (n) und damit zur maximalen Lichtübertragung regelt.

**Patentansprüche**

1. Faseroptischer Schalter mit einem starren Schaltelement und einem bewegbaren Schaltelement, wobei am starren Schaltelement und am bewegbaren Schaltelement jeweils wenigstens eine Lichtwellenleiterfaser befestigt ist, deren einander zugewandte Faserschaltenden in der einen Schaltstellung an der vorhandenen Stoßstelle miteinander fluchten, und das bewegbare Schaltelement in einer die Faserschaltenden enthaltenden Ebene quer zur Lichtwellenleiterfaser verschiebbar an den einen Enden von biegbaren Streifen gehalten ist, die einen Abstand voneinander aufweisen, sich quer zur Bewegungsrichtung des bewegbaren Schaltelements erstrecken, hochkant zur Bewegungsebene angeordnet sind und mit ihren anderen freien Enden ortsfest gehalten sind, dadurch **gekennzeichnet,** daß das starre Schaltelement (1a), das bewegbare Schaltelement (1b) und die biegbaren Streifen (8) einteilig miteinander verbunden sind.

2. Schalter nach Anspruch 1, dadurch gekennzeichnet, daß als Antriebselement für das bewegbare Schaltelement (1b) ein Elektromagnet, ein aktivierbares Biegeelement (24), insbesondere ein Piezoelement, oder ein pneumatisches Antriebsteil vorgesehen ist.

3. Schalter nach Anspruch 2, dadurch gekennzeichnet, daß das Biegeelement (24) die Stoßstelle (15) zwischen den Faserschaltenden (13a, 13b, 14a, 14b) überbrückend angeordnet ist.

4. Faseroptischer Schalter mit einem starren Schaltelement und einem bewegbaren Schaltelement, wobei am starren Schaltelement und am bewegbaren Schaltelement jeweils wenigstens eine Lichtwellenleiterfaser befestigt ist, deren an einer Stoßstelle einander zugewandte Faserschaltenden in der einen Schaltstellung miteinander fluchten, und das bewegbare Schaltelement in einer die Faserschaltenden enthaltenen Ebene quer zu den Faserschaltenden bewegbar ist, wobei als Antriebselement für das bewegbare Schaltelement ein insbesondere stabförmiges, aktivierbares Biegeelement vorgesehen ist, dadurch **gekennzeichnet,** daß das Biegeelement (24) die Stoßstelle (15) überbrückend angeordnet ist.

5. Schalter nach einem oder mehreren der Ansprüche 2 bis 4, dadurch gekennzeichnet, daß das Biegeelement (24) ein aktivierbarer Biegestab, insbesondere ein aktivierbarer Biegestreifen (24) ist.

6. Schalter nach einem oder mehreren der Ansprüche 2 bis 5, dadurch gekennzeichnet, daß das Biegeelement (24) am starren Schaltelement (1a) gehalten ist.

7. Schalter nach einem oder mehreren der Ansprüche 4 bis 6, dadurch gekennzeichnet, daß das bewegbare Schaltelement (1b) durch zwei biegbare Streifen (8) in der Bewegungsebene und quer zu den Faserschaltenden bewegbar gehalten ist, die in einem vorzugsweise parallelen Abstand voneinander angeordnet sind, sich quer zur Bewegungsrichtung erstrecken und hochkant zur Bewegungsebene angeordnet sind.

8. Schalter nach einem oder mehreren der Ansprüche 4 bis 7, dadurch gekennzeichnet, daß das starre Schaltelement (1a), das bewegbare Schaltelement (1b) und die biegbaren Streifen (8) einteilig miteinander verbunden sind.

9. Schalter nach einem oder mehreren der vorhergehenden Ansprüche, dadurch gekennzeichnet, daß die biegbaren Streifen (8) an den aneinander zugewandten Enden des starren Schaltelements (1a) und des bewegbaren Schaltelements (1b) befestigt, vorzugsweise einteilig angebunden sind.

10. Schalter nach einem oder mehreren der vorhergehenden Ansprüche, dadurch gekennzeichnet, daß das starre und das bewegbare Schaltelement (1a, 1b) jeweils durch einen Stegteil (2a, 2b) mit von dessen Längsrändern U-förmig ausgehenden Schenkelteilen (3a, 3b) gebildet sind, wobei die biegbaren Streifen (8) an den einander zugewandten Enden der Schenkelteile (3a, 3b) vorzugsweise einstückig angebunden sind und die Stegteile (2a, 2b) durch einen U-förmigen oder H-förmigen Schlitz (5, 7) voneinander getrennt sind.

Fig.1

Fig.2

Fig.3

Fig.4

Fig.5

Fig.6

Fig.7